# EUROPEAN PATENT APPLICATION

(11) **EP 1 681 212 A2**
(43) Date of publication of application: **19.07.2006**
(21) Application number: 06000017.1
(22) Date of filing: 02.01.2006
(51) Int. Cl.: B60R 21/34

(54) **Protection apparatus for pedestrian or the like and airbag therefor**

(30) Priority: 13.01.2005 JP 2005006564; 29.11.2005 JP 2005344096
(71) Applicant: TAKATA CORPORATION, Minato-ku, Tokyo 106-8510 (JP)
(72) Inventor: Nakamura, Atsushi, Tokyo 106-8510 (JP)
(74) Representative: Vossius & Partner

(57) **Abstract**

An airbag is provided that is promptly developed in an area for the airbag to be developed without using a device provided with high output power to serve as an inflator. A protection apparatus for a pedestrian or the like having the airbag is also described. When a contact of a pedestrian with a motor vehicle is detected or predicted, the inflator 14 is activated and the airbag 10 is developed. The gas from the inflator 14 is supplied into a first bag 11 first, and the first bag 11 is thereby expanded at a high internal pressure and is developed along a cowl top 2 and an A pillar 6. Thereafter, the gas flows into the second bag 12 from the first bag 11 passing through an opening 13 that allows an inner part of the first bag 11 to communicate with that of the second bag 12, and develops the second bag 12. Since the first bag 11 is expanded and developed first, the first bag 11 can be sufficiently and promptly developed in an area for the first bag 11 to be developed without using a device provided with high output power to serve as the inflator 14 (Fig. 2).

## Description

The present invention relates to an apparatus for protecting a pedestrian or the like and an airbag for the protection apparatus, and more particularly relates to a protection apparatus for protecting a pedestrian or the like and an airbag for the protection apparatus by preventing a pedestrian, a rider of a bicycle, a rider of a motor cycle, or the like (hereinafter referred to as a pedestrian or the like) from directly hitting with a portion having high rigidity, such as a pillar portion of a vehicle body or the like, in case that a motor vehicle collides with the pedestrian or the like when driving.

When a motor vehicle collides with a pedestrian or the like while the motor vehicle is running, a lower body of the collided pedestrian or the like is sometimes swept by a front portion of the vehicle body and is thrown up on a hood that covers an upper face of the front portion of the vehicle body, and is secondarily collided with a portion having high rigidity or the like, such as a pillar portion or the like.

In JP-A-2000-264146 (Patent Document 1), a protection apparatus is disclosed, in which a pedestrian or the like is protected by preventing the pedestrian or the like from directly hitting with a vicinity of a cowl top and an A pillar when the motor vehicle collides with the pedestrian or the like, by means of expanding an airbag along the cowl top of the motor vehicle and the left and right A pillars.

In JP-A-2000-264146, it is required to use an inflator with high output power so as to promptly develop an airbag in an area for the airbag to be developed. In addition, there is a possibility that an internal pressure of the developed airbag is excessively increased.

It is an object of the present invention to provide an airbag that is promptly developed in an area for the airbag to be developed without using an inflator with high output power, and to provide a protection apparatus with the airbag for protecting a pedestrian or the like.

An airbag according to Claim 1 for protecting a pedestrian or the like that is configured to develop along an outer face of a vehicle body by gas from an inflator is characterized in that the airbag includes a first chamber developing along an area for the airbag to be developed in the outer face of the vehicle body, in which gas from the inflator is led first, and a second chamber being communicated with the first chamber and developing by the gas discharged from the first chamber.

The airbag according to Claim 2 is characterized in that, in the airbag according to Claim 1, the airbag includes a base portion developing along a cowl top, and a pair of side portions developing along a left and right A pillars, being connected to both a left and a right ends of the base portion in a continuous manner.

The airbag according to Claim 3 is characterized in that, in the airbag according to Claims 1 or 2, the second chamber surrounds a periphery of the first chamber.

The airbag according to Claim 4 is characterized in that, in the airbag according to Claims 1 or 2, the first chamber surrounds a periphery of the second chamber.

The airbag according to Claim 5 is characterized in that, in the airbag according to Claim 2, the first chamber is provided across the base portion and the side portion in a continuous manner and the second chamber is disposed at least at a lateral outer side to the first chamber in the side portion.

The airbag according to Claim 6 is characterized in that, in the airbag according to Claim 5, the second chamber is disposed at a lateral outer side to the first chamber and a lateral inner side to the first chamber in the side portion, respectively.

The airbag according to Claim 7 is characterized in that, in the airbag according to Claim 5, the second chamber extends across a lateral outer side to the first chamber in the side portion and a lateral outer side to the base portion in a continuous manner, and a communicating portion for allowing the first chamber to communicate with the second chamber is disposed at a base portion side.

The airbag according to claim 8 is characterized in that, in the airbag according to Claim 2, the second chamber is provided along the side portion and the base portion at a side of a windshield, and the first chamber is disposed along the side portion and the base portion at a side opposite to the windshield.

The airbag according to Claim 9 is characterized in that, in the airbag according to Claim 8, the second chamber of the side portion and the second chamber of the base portion are partitioned to be separated.

The airbag according to Claim 10 is characterized in that, in the airbag according to Claim 8, the second chamber of the side portion is allowed to be directly communicated with the second chamber of the base portion.

The airbag according to Claim 11 is characterized in that, in the airbag according to any one of Claims 1 through 10, the airbag includes a first bag that surrounds the first chamber and a second bag that surrounds the second chamber, and in which the first bag is disposed in an inner part of the second bag.

The airbag according to Claim 12 is characterized in that, in the airbag according to any one of Claims 1 through 10, the airbag includes a first bag that surrounds the first chamber and a second bag that surrounds the second chamber, and the first bag is disposed at an outer part of the second bag, and the first bag is connected to the second bag in a continuous manner.

A protection apparatus according to Claim 13 for a pedestrian or the like is characterized in that the protection apparatus includes the airbag according to any one of Claims 1 through 12, and the inflator for supplying gas into the first chamber.

In an airbag and a protection apparatus for a pedestrian according to the present invention, the first chamber is developed along an area for the airbag to be developed first by gas from an inflator, and then a second chamber is developed by the gas discharged from the first gas chamber.

Accordingly, the first chamber is promptly developed at a relatively high internal pressure by the gas from the inflator, and the airbag is thereby disposed at an area for the airbag to be developed.

Thereafter, the second chamber is also developed by means of the flow of the gas from the first chamber into the second chamber. As a result, the internal pressure of the first chamber is lowered and a final internal pressure of the second chamber reaches an internal pressure approximately equal to a final internal pressure of the first chamber. Therefore, an internal pressure of an entire airbag is not excessively increased. Consequently, a shock applied to the pedestrian or the like is brought to a state to be sufficiently absorbed by the airbag. In addition, a discharging amount of the gas from a gas discharging device, such as a vent or the like can be set smaller and the internal pressure of the airbag can be held not less than a predetermined pressure for relatively long time.

In the present invention, the second chamber may be constructed to surround a periphery of the first chamber. In a case that the airbag is thus constructed, when the airbag is expanded and developed, the first chamber is expanded first, and then the second chamber is expanded successively, resulting in forming a final shape of the development.

In the present invention, contrary to the construction described above, the first chamber may be constructed to surround a periphery of the second chamber. In a case that the airbag is thus constructed, when the airbag is expanded and developed, the first chamber is expanded first so as to settle an outline of the airbag into a shape, and then the second chamber is expanded successively, resulting in forming a final shape of the development.

The present invention is preferable to be applied to a case when the airbag has an approximately U-shape and is formed of a base portion that is expanded and developed to cover a cowl top, and a pair of side portions that is expanded and developed to cover the left and right A pillars.

In this case, the first chamber may be provided across the base portion and the side portion in a continuous manner, and the second chamber may be provided at least at a lateral outer side of the side portion (on a side opposite to a windshield), thereby forming a large lateral width of the side portion.

Further, the second chamber may be provided at both the lateral outer side and the lateral inner side of the side portion (on a side of the windshield) and the lateral width of the side portion may be further increased.

The second chamber at the lateral outer side of the side portion may be extended to the lateral outer side of the base portion. In this case, a communicating portion for leading gas from the first chamber to the second chamber may be provided at a base portion side. When the airbag is thus constructed, the gas from the inflator disposed at a base portion side can be promptly flowed into the second chamber from the first chamber, and the second chamber can be promptly expanded.

The second chamber may be disposed along the windshield side of the side portion and the base portion, and the first chamber may be disposed along the side portion and the base portion at a side opposite to the windshield. When the airbag is thus constructed, an outer periphery side (a side opposite to the windshield) of the airbag is expanded and developed first, and then the inner periphery side (a side of the windshield) of the airbag is expanded and developed successively.

In this case, the second chamber of the side portion and that of the base portion may be divided or partitioned, or may be directly (namely, not through the first chamber) communicated with each other.

When the second chamber is partitioned into the side portion and the base portion , a rise of gas pressure due to a decrease of a volume of the second chamber becomes large when the pedestrian hits the second chamber.

When the second chamber of the base portion and that of the side portion are directly communicated with each other, internal pressure of each of the second chambers becomes approximately uniform when expanded.

In the present invention, the first bag may be disposed at an inner part of the second chamber. When the airbag is thus constructed, an entire airbag can be promptly disposed in an area for the airbag to be expanded.

In the present invention, the first bag may be disposed at an outer part of the second bag. With this structure, for example, the first chamber can be developed along a relatively flat area in an outer face of the vehicle body and can be constructed in a manner so as to be smoothly developed.

Hereinbelow, an embodiment will be explained referring to the Figures.
FIG. 1(a) and FIG. 1(b) are perspective views illustrating a motor vehicle provided with a protection apparatus for a pedestrian or the like according to an embodiment;
FIG. 2(a) and FIG. 2(b) are explanatory views of an airbag according to an embodiment;
FIG. 3 is a graph of internal pressure of the airbag versus time according to the embodiment;
FIG. 4 is a plan view illustrating an airbag according to another embodiment;
FIG. 5 is a plan view illustrating an airbag according to still another embodiment;
FIG. 6 is a cross-sectional view illustrating an airbag according to yet another embodiment;
FIG. 7 is a diagram illustrating an airbag according to another embodiment;
FIG. 8 is a diagram illustrating an airbag according to still another embodiment;
FIG. 9 is a diagram illustrating an airbag according to yet another embodiment; and
FIG. 10 is a diagram illustrating an airbag according to another embodiment.

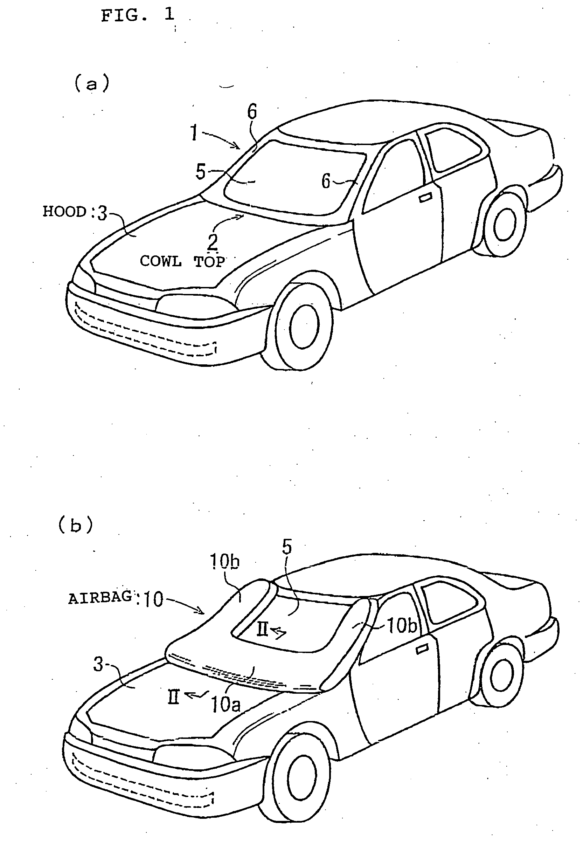

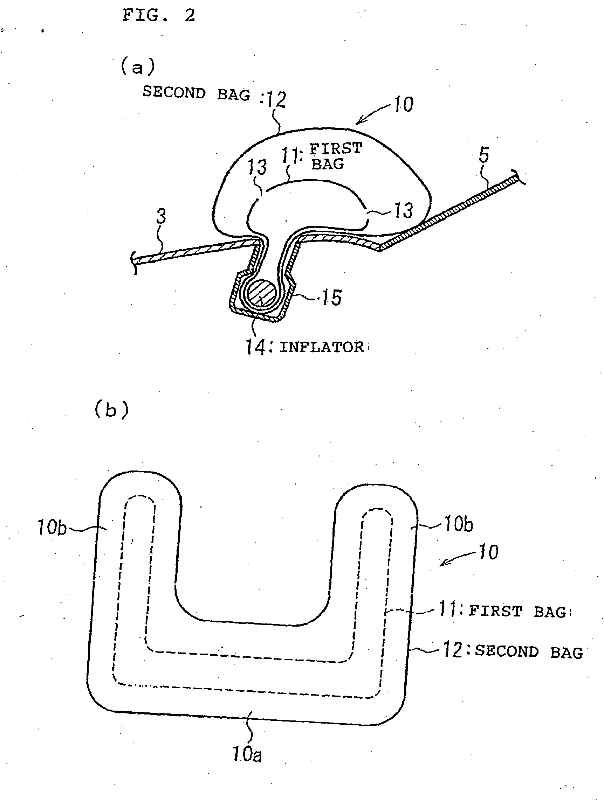

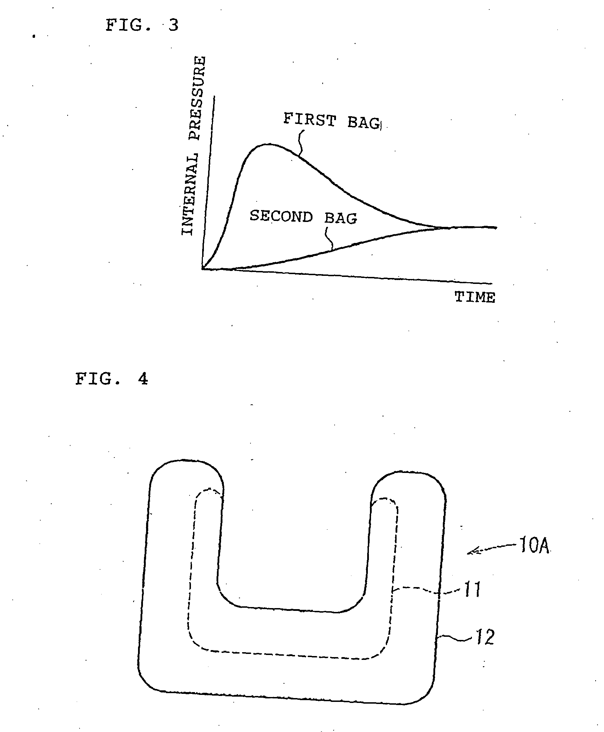

FIGs. 1(a) and 1(b) are perspective views illustrating a motor vehicle provided with a protection apparatus for a pedestrian or the like according to an embodiment. FIG. 2(a) shows a cross-section of an airbag taken along line II-II of FIG. 1(b). FIG. 2(b) is a plan view illustrating an airbag. FIG. 3 is a graph of internal pressure of the airbag versus time.

As illustrated in FIG. 1(a), although a motor vehicle 1 is a four-door sedan, the present invention is not limited to the four-door sedan. In a rear portion of a hood 3, or a cowl top 2, an airbag apparatus is disposed.

The airbag apparatus opens and expands an airbag 10 when the motor vehicle 1 collides with a pedestrian or the like. The airbag apparatus is provided with the airbag 10 including a first bag 11 and a second bag 12 in which the first bag 11 is disposed in an inner part thereof, an opening 13 formed in the first bag 11, an inflator 14 for supplying gas into the first bag 11, a case 15 where the folded first and second bags, 11 and 12, and the inflator 14 are housed, and a lid (not shown) that covers the case 15 at a usual time and uncovers the lid when the airbag 10 is expanded. The lid may form an outer face of a vehicle body of the motor vehicle 1. The airbag apparatus may be disposed at a lower side of a rear portion of the hood 3 and push open the rear portion of the hood 3 when the airbag 10 is expanded.

An internal part of the airbag 10 is partitioned into two chambers, i.e., a first chamber and a second chamber (reference numerals of both the chambers are omitted in this embodiment) by the first bag 11 and the second bag 12. Further, internal space of the first bag 11 serves as the first chamber and space between the first bag 11 and the second bag 12 serves as the second chamber.

The airbag 10 is formed of an approximately U-shape being provided with a base portion 10a that develops along the cowl top 2, and a pair of side portions 10b that develops along a left and right A pillars 6 of a windshield 5.

A vent (not shown) is formed in the second bag 12.

Operation of the protection apparatus for the pedestrian or the like is as follows.

When contact of the pedestrian or the like with the motor vehicle is detected or predicted, the inflator 14 is activated and the airbag 10 is thereby developed, as shown in FIG. 1(b) and FIG. 2(a). In this case, the gas from the inflator 14 is supplied into the first bag 11 first, and the first bag 11 is expanded at a high internal pressure and is developed along the cowl top 2 and the A pillar 6. Thereafter, the gas is flowed into the second bag 12 from the first bag 11, passing through an opening 13 that allows an internal part of the first bag 11 to communicate with that of the second bag 12 and thereby the second bag 12 is also developed. In this case, an internal pressure of the second bag 12 is raised while the internal pressure of the first bag 11 is lowered, and finally, the internal pressures of the first and second bags 11 and 12 reach a state to be approximately equal, as shown in FIG. 3.

When the pedestrian or the like hits the airbag 10 formed with the thus developed first and second bags 11 and 12, the pedestrian or the like is softly received by the airbag 10 because the internal pressure of the airbag 10 is relatively low as a whole, and the shock is absorbed. The shock is further absorbed by a discharge of the gas from the vent.

In the protection apparatus for the pedestrian or the like, because the first bag 11 is expanded and developed first, the first bag 11 can be sufficiently and promptly developed in the area for the first bag 11 to be developed without using a device with high output power to serve as the inflator 14. Thereafter, the second bag 12 is also developed by the discharged gas from the first bag 11. However, the second bag 12 is already disposed in the area for the first bag 12 to be developed in such a manner that the second bad 12 is dragged by the first bag 11. Because the second bag 12 is expanded while only increasing a volume thereof and receiving almost no resistance such as friction or the like from a periphery, the second bag 12 is sufficiently and promptly developed even at a low gas pressure.

Since the internal pressure of the developed second bag 12 is not so high, an amount of the gas discharged from the vent by the internal gas pressure of the second bag 12 is little and therefore the internal pressure of the airbag 10 is sufficiently kept up for a long time. Accordingly, there is no need to adopt a device that continuously generates the gas for a long time to serve as the inflator 14, and there is also no need to activate a plurality of inflators which have different activation time from each other.

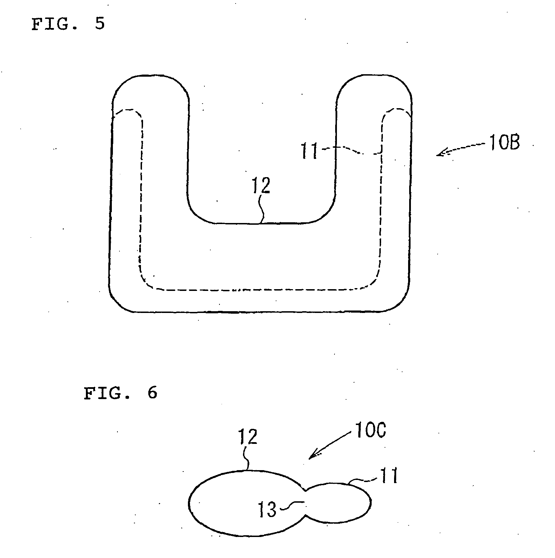

In the above-described airbag 10, the first bag 11 is disposed in the vicinity of a center in a width direction of the second bag 12. The first bag 11 may be disposed at an inner periphery side or an outer periphery side in the second bag 12 as an airbag 10A or an airbag 10B, shown in FIGs. 4 and 5. The first bag 11 may be disposed at an outer part of the second bag 12 as an airbag 10C, shown in FIG. 6.

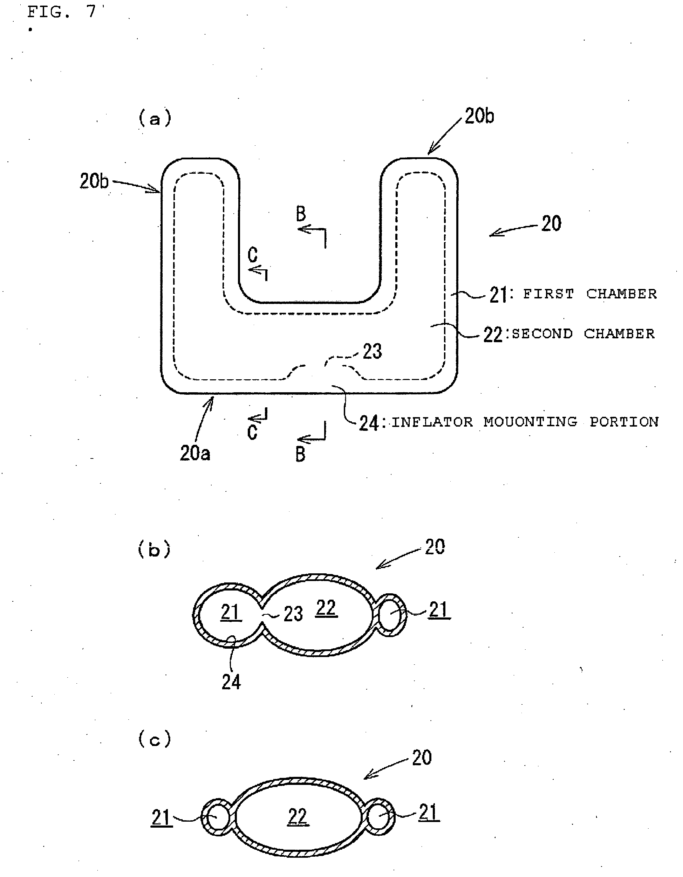

FIGs. 7 through 10 illustrate another embodiment of the airbag.

FIG. 7(a) is a plan view illustrating an airbag 20 according to another embodiment, and FIGs. 7(b) and 7(c) are cross-sectional views along a B-B line and a C-C line in FIG. 7(a), respectively.

As shown in FIG. 7(a), the airbag 20 also has an approximately U-shape, formed with a base portion 20a that is developed along a cowl top 2 of the motor vehicle, and a pair of side portions 20b that is developed along the A pillars 6 positioned on the left and right sides of a windshield 5. In this embodiment, the internal part of the airbag 20 is partitioned into a second chamber 22 that is continuously extends from the base portion 20a to a vicinity of a tip end of the left and right side portions 20b, and a first chamber 21 that surrounds a periphery of the second chamber 22 along an outer periphery of the airbag 20. The first chamber 21 is communicated with the second chamber 22 via an opening 23. In addition, the first chamber 21 surrounds over an entire periphery of the second chamber 22.

In this embodiment, a portion in the first chamber 21, which is positioned at a outer periphery side of the airbag (a side opposite to that of the windshield 5) in the vicinity of a center of the base portion 20a in the width direction of the motor vehicle serves as an inflator mounting portion 24. As shown in FIGs. 7(b) and 7(c), the first chamber 21 has a diameter greater than that of the other portion in the inflator mounting portion 24. The inflator (not shown) is mounted in the inflator mounting portion 24. As illustrated in FIGs. 7(a) and 7(b), the opening 23 allows the inflator mounting portion 24 to communicate with the second chamber 22.

In the airbag 20 with this structure, when the airbag is expanded, the first chamber 21 is expanded first, thereby settling an outline of the airbag 20 into a shape. Then the second chamber 22 is successively expanded, resulting in forming a final shape of the expansion. Thus, the airbag 20 widely covers an area for the airbag 20 to be developed in a relatively early stage of the expansion.

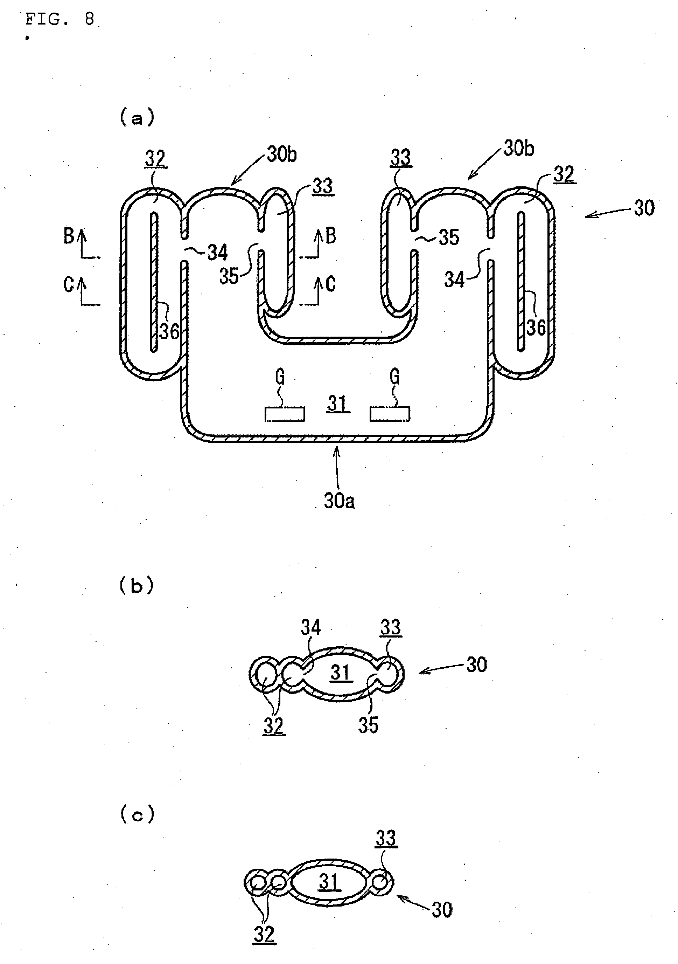

FIG. 8(a) is a horizontal cross-sectional view illustrating an airbag 30 according to still another embodiment, and FIGs. 8(b) and 8(c) are cross-sectional views along lines, B-B and C-C, in FIG. 8(a), respectively.

As shown in FIG. 8(a), the airbag 30 also has an approximately U-shape, formed with a base portion 30a that is developed along the cowl top 2 of the motor vehicle, and a pair of side portions 30b that is developed along the A pillars 6 positioned on the left and right sides of the windshield 5.

In this embodiment, a first chamber 31 is formed so as to extend from the base portion 30a to a tip end of the left and right side portions 30b in a continuous manner, and the second chambers, 32 and 33 are respectively formed at the lateral outer side (a side opposite to that of the windshield 5) and the lateral inner side (the side of the windshield 5) of the side portions 30b. Further, in an explanation below, the second chamber 32 disposed at the lateral outer side of the side portions 30b is sometimes referred to as an outside second chamber 32, and the second chamber 33 disposed at the lateral inner side of the side portions 30b is sometimes referred to as an inside second chamber 33. The first chamber 31, and the second chambers, 32 and 33 are communicated with each other through openings 34 and 35, respectively. Each of the openings 34 and 35 is provided in the middle of an extending direction of each of the side portions 30b.

As illustrated in the FIGs 8(a) to 8(c), in this embodiment, the outside second chamber 32 is configured to have the width in the left and right direction greater than that of the inside second chamber 33. In the vicinity of a lateral center of the outside second chamber 32, an upper face panel and a lower face panel of the airbag 30 are partially combined by linear combination portion 36 formed by stitching work, or the like. The linear combination portion 36 is extended in a vertical direction in FIG. 8(a)so as to partition an internal part of the outside second chamber 32 into the left side half and the right side half. In addition, both ends of the linear combination portion 36 are spaced from an upper end and lower end of the outside second chamber 32, respectively, and the left side half of the out side second chamber 32 is communicated with the right side half of the outside second chamber 32 at the upper end and lower end of the outside second chamber 32, respectively.

In this embodiment, the two pieces of inflators G are mounted on an inside of a portion in the first chamber 31, which forms the base portion 30a, being spaced in the left and right direction.

In the airbag 30, because the second chambers 32 and 33 are provided at a lateral outer side and lateral inner side of the left and right side portions 30b, respectively, the lateral width of each of the side portions 30b can be formed greater when the airbag is expanded, and a protection capability in the vicinity of the left and right A pillars 6 is improved.

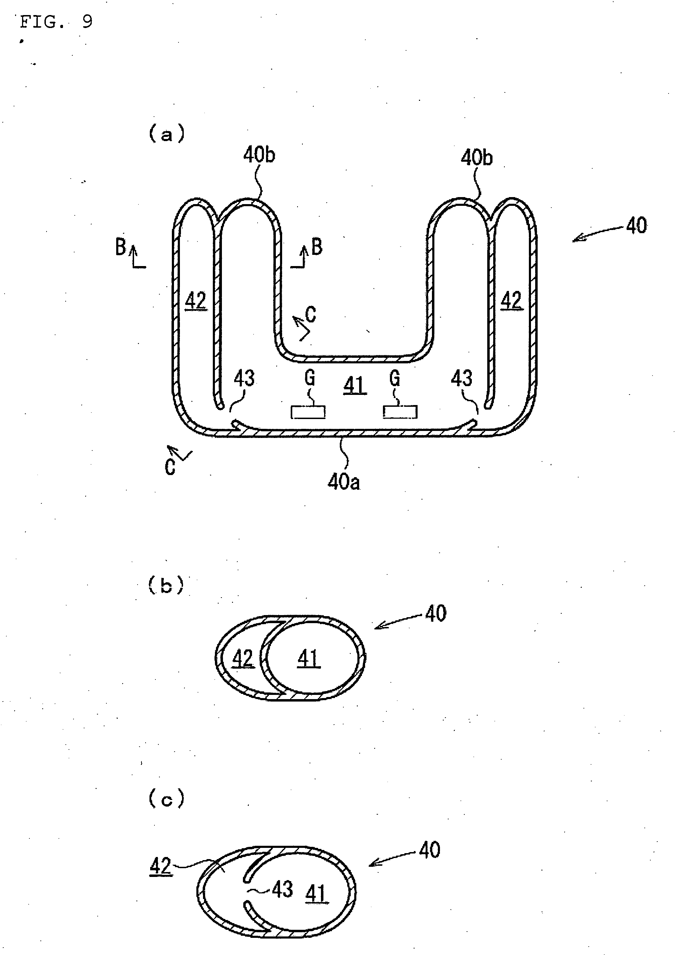

FIG. 9(a) is a horizontal cross-sectional view of the airbag 40 according to still another embodiment, and FIGs. 9(b) and 9(c) are cross-sectional views along a B-B line and a C-C line in FIG. 9(a), respectively.

As shown in FIG. 9(a), the airbag 40 also has an approximately U-shape, formed with a base portion 40a that is developed along the cowl top 2 of the motor vehicle, and a pair of side portions 40b that is developed along the A pillars 6 positioned on the left and right sides of the windshield 5. Further, a first chamber 41 is formed so as to extend from the base portion 40a to a tip end of the left and right side portions 40b in a continuous manner, and second chambers 42 are respectively formed at the lateral outer side of the side portions 40b.

As shown in FIG. 9(a), in this embodiment, the second chambers 42 extends continuously from a tip end side of each of the side portions 40b to lateral end sides of the base portion 40a. At the lateral ends of the base portion 40a, each of openings 43 are provided for allowing the first chamber 41 to communicate with the second chamber 42.

In this embodiment, two pieces of inflators G are also mounted on an inside of a portion in the first chamber 41, which forms the base portion 40a, being spaced in the left and right direction.

In the airbag 40, because the second chamber 42 is provided at a lateral outer side of the left and right side portions 40b, the lateral width of each of the side portions 40b can be formed greater when the airbag is expanded and developed, and the protection capability in the vicinity of the left and right A pillars 6 is improved.

Further, in the airbag 40, because the opening 43 for allowing the first chamber 41 to communicate with the second chamber 42 is provided at lateral end sides of the base portion 40a, gas from the inflator G disposed in the base portion 40a can be promptly caused to flow into the second chamber 42 when the airbag 40 is expanded and developed, the second chamber 42 can be promptly expanded.

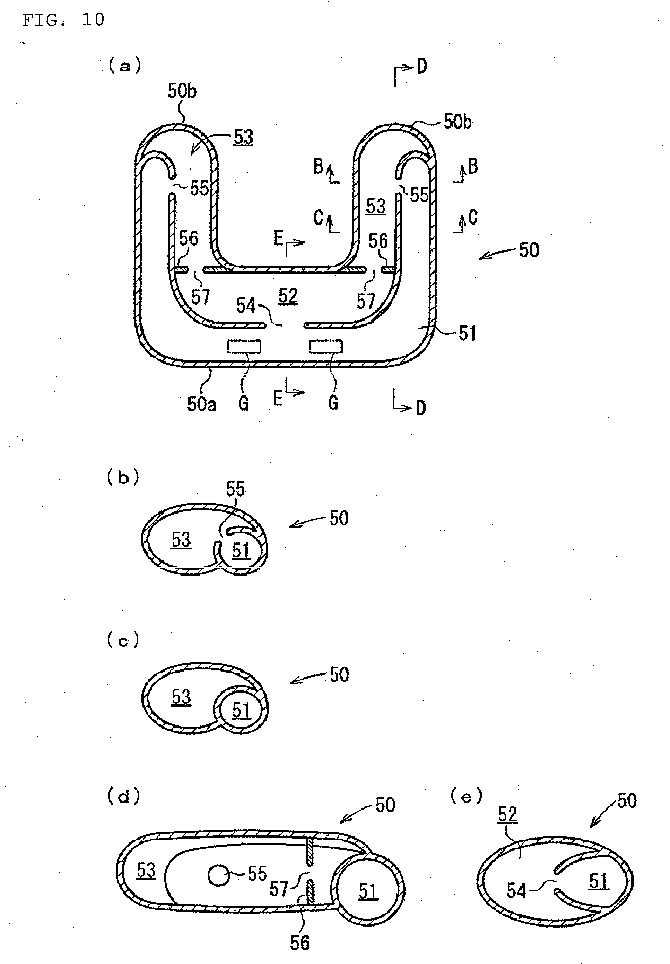

FIG. 10(a) is a horizontal cross-sectional view illustrating an airbag 50 according to still another embodiment, and FIGs. 10(b), 10(c), 10(d), and 10(e) are cross-sectional views along a B-B line, a C-C line, a D-D line and an E-E line, respectively, in FIG. 10(a).

As shown in FIG. 10(a), the airbag 50 also has an approximately U-shape provided with a base portion 50a that is developed along the cowl top 2 of the motor vehicle, and a pair of side portions 50b that is developed along the A pillars 6 positioned on the left and right sides of the windshield 5.

In this embodiment, a first chamber 51 is formed at an outer periphery side (a side opposite to the windshield 5) of the base portion 50a and the left and right side portions 50b, and the second chambers, 52 and 53 are respectively formed at an inner periphery side (a side of the windshield 5) of the base portion 50a and the left and right side portions 50b. Although the first chamber 51 extends continuously from the base portion 50a to the left and right side portions 50b, the second chamber 52 extends substantially along only the base portion 50a, and each of the second chambers 53 is configured to be extended substantially along only the left and right side portions 50b, respectively. Each of these second chambers 52 and 53 is respectively partitioned by an inner panel 56.

The first chamber 51 and the second chamber 52 that extend along the base portion 50a communicate with each other via an opening 54 in the vicinity of a lateral center of the base portion 50a, and the second chamber 53 that extends along the left and right side portions 50b and the first chamber 51 communicate with each other via an opening 55 at a tip end side of each of the side portions 50b. Further, in this embodiment, an opening 57 is formed in the inner panel 56, and the second chamber 52 at the base portion 50a side is directly communicated with the second chamber 53 at each of the side portions 50b side via the opening 57.

In this embodiment, two pieces of inflators G are also mounted at an inside of a portion in the first chamber 51, which forms the base portion 50a, being spaced in the left and right direction.

In the airbag 50, because the second chambers 52 and 53 are disposed along an inner periphery side (a side of the windshield 5) of the bases portion 50a and each of the side portions 50b, and the first chamber 51 is disposed along an outer periphery side (a side opposite to the windshield 5) of the base portion 50a and the each of the side portions 50b, the airbag 50 is expanded and developed from its outer periphery side first, and then the inner periphery side thereof is successively expanded and developed. In this embodiment, because each of the second chambers 52 and 53 is directly communicated with each other via the opening 57, internal pressure of each of the second chambers 52 and 53 is caused to be approximately uniform when the airbag is expanded.

Further, in the present invention, the opening 57 may be omitted and each of the second chambers 52 and 53 may be separated. Thus, in a case when the second chambers 52 and 53 are partitioned into portions at the base portion 50a side and the side portion 50b side, the gas pressure along with the decrease in volume of the second chambers 52 and 53 is caused to greatly increase when the pedestrian or the like hits the second chambers 52 and 53.

Each of the aforementioned embodiments is illustrative of the present invention and the description of the embodiments is not to be construed as limiting the invention.

In the present invention, the first chamber and the second chamber have no specific limitation in number and the disposition thereof, and the airbag can be provided in various kinds of structures other than that in the aboveillustrated figures.

In the aforementioned embodiment, although the airbag 10 is developed in a manner as to cover the cowl top 2 and the A pillar 6, the airbag 10 may be developed in a manner as to cover another portion of a motor vehicle 1.

In the present invention, the airbag may be provided with the first chamber and the second chamber configured by a first bag and a second bag being formed in separate bodies, or the first chamber and the second chamber may be provided by partitioning an internal part of a bag-shaped body into a plurality of chambers.

## Claims

1. An airbag for protecting a pedestrian or the like that is configured to develop along an outer face of a vehicle body by gas from an inflator comprising:
a first chamber developing along an area for the airbag to be developed in the outer face of the vehicle body, wherein gas from the inflator is led first; and
a second chamber being communicated with the first chamber and developing by the gas discharged from the first chamber.

2. The airbag according to Claim 1, wherein the airbag comprises a base portion developing along a cowl top, and a pair of side portions developing along a left and right A pillars, being connected to both a left and a right ends of the base portion in a continuous manner.

3. The airbag according to Claims 1 or 2, wherein the second chamber surrounds a periphery of the first chamber.

4. The airbag according to Claims 1, 2 or 3, wherein the first chamber surrounds a periphery of the second chamber.

5. The airbag according to Claim 2, 3 or 4, wherein the first chamber is provided across the base portion and the side portion in a continuous manner and the second chamber is disposed at least at a lateral outer side to the first chamber in the side portion.

6. The airbag according to Claim 5, wherein the second chamber is disposed at a lateral outer side to the first chamber and a lateral inner side to the first chamber in the side portion, respectively.

7. The airbag according to Claim 5 or 6, wherein the second chamber extends across a lateral outer side to the first chamber in the side portion and a lateral outer side to the base portion in a continuous manner, and wherein a communicating portion for allowing the first chamber to communicate with the second chamber is disposed at a base portion side.

8. The airbag according to any one of Claims 2 to 7, wherein the second chamber is provided along the side portion and the base portion at a side of a windshield, and wherein the first chamber is disposed along the side portion and the base portion at a side opposite to the windshield.

9. The airbag according to Claim 8, wherein the second chamber of the side portion and the second chamber of the base portion are partitioned to be separated.

10. The airbag according to Claim 8 or 9, wherein the second chamber of the side portion is allowed to be directly communicated with the second chamber of the base portion.

11. The airbag according to any one of Claims 1 through 10, wherein the airbag comprises a first bag that surrounds the first chamber and a second bag that surrounds the second chamber, and wherein the first bag is disposed in an inner part of the second bag.

12. The airbag according to any one of Claims 1 through 10, wherein the airbag comprises a first bag that surrounds the first chamber and a second bag that surrounds the second chamber, and wherein the first bag is disposed at an outer part of the second bag, and the first bag is connected to the second bag in a continuous manner.

13. A protection apparatus for a pedestrian or the like comprising:
the airbag according to any one of Claims 1 through 12; and
the inflator for supplying the gas into the first chamber.
